# EUROPÄISCHE PATENTSCHRIFT

(11) **EP 2 185 377 B1**
(45) Veröffentlichungstag und Bekanntmachung des Hinweises auf die Patenterteilung: **26.10.2011**
(21) Anmeldenummer: 08784984.0
(22) Anmeldetag: 23.07.2008
(51) Int. Cl.: B60N 2/015, B64D 11/06

(54) **BEFESTIGUNGSSYSTEM ZUR SCHNELL LÖSBAREN BEFESTIGUNG VON INNENRAUMKOMPONENTEN IN DER KABINE EINES LUFTFAHRZEUGS**
FASTENING SYSTEM FOR QUICK-RELEASABLY FASTENING INTERIOR COMPONENTS IN THE CABIN OF AN AIRCRAFT
SYSTÈME DE FIXATION POUR LA FIXATION À LIBÉRATION RAPIDE D'ÉLÉMENTS DE L'INTÉRIEUR D'UNE CABINE D'AVION

(30) Priorität: 02.08.2007 DE 102007036449
(43) Veröffentlichungstag der Anmeldung: 19.05.2010
(73) Patentinhaber: Michler, Walter, 82279 Eching/Ammersee (DE)
(72) Erfinder: Michler, Walter, 82279 Eching/Ammersee (DE)
(74) Vertreter: Grättinger Möhring von Poschinger Patentanwälte Partnerschaft
(86) Internationale Anmeldenummer: PCT/EP2008/006025
(87) Internationale Veröffentlichungsnummer: WO 2009/015809

(56) Entgegenhaltungen:
- EP-A- 0 947 380
- DE-A1- 10 034 019
- DE-A1- 10 229 385
- US-A- 3 300 171
- US-A- 5 236 153

## Beschreibung

Die vorliegende Erfindung betrifft ein Befestigungssystem zur schnell lösbaren Befestigung von Innenraumkomponenten in der Kabine eines Luftfahrzeugs.

Luftfahrzeuge, insbesondere Verkehrsflugzeuge, können entsprechend dem Ausstattungswunsch des jeweiligen Betreibers mit individuellen Innenraumkomponentren bestückt werden. Dies betrifft nicht nur die Bestuhlung, sondern auch Einbauten wie Schränke, Bordküchen und dergleichen. Entsprechendes gilt für Frachtflugzeuge, was das sichere Verstauen der Ladung gewährleistende Innenraumkomponenten (einschließlich Anschlägen für Lastverzurrelemente) betrifft.

Verbreitet werden Luftfahrzeuge mit Befestigungsschienen ausgestattet, die dauerhaft mit der Struktur des Luftfahrzeuges verbunden werden und einen C-förmigen Querschnitt aufweisen. Zu ihrer schnell lösbaren Befestigung an derartigen Befestigungsschienen sind mit den betreffenden Innenraumkomponenten typischerweise Beschläge fest verbunden, die mit den Befestigungsschienen zusammenwirkende, in diese eingreifende Riegelelemente aufweisen und eine mehr oder weniger schnelle Befestigung der betreffenden Innenraumkomponente gestatten. Insoweit ist beispielsweise zu verweisen auf die EP 583295 B1, die DE 10337746 A1, die DE 19520959 A1, die EP 1342662 A1, die US 3381921 A1, die DE 3804354 A1, die EP 105675 A2, die DE 2732460 A1, die DE 1431569 A1, die US 4277043, die EP 215495 A2, die EP0947380 und die US 3300171.

Gegenüber diesem Stand der Technik liegt der vorliegenden Erfindung die Aufgabe zugrunde, ein Befestigungssystem der eingangs angegebenen Art bereitzustellen, welches geeignet ist, gegenüber dem Stand der Technik zu einer Reduktion des Gesamtgewichts des Luftfahrzeugs beizutragen, ohne dass dies nachteilige Auswirkungen auf die Sicherheit der Befestigung der Innenraumkomponenten, die Flexibilität der Innenraumgestaltung und/oder den mit der Ausrüstung des Luftfahrzeugs mit der Innenraumausstattung bzw. deren Austausch verbundenen Zeit- oder technischen Aufwand hat oder mit Kostennachteilen verbunden ist.

Gelöst wird die vorstehend angegebene Aufgabenstellung gemäß der vorliegenden Erfindung durch ein Befestigungssystem zur schnell lösbaren Befestigung von Innenraumkomponenten in der Kabine eines Luftfahrzeugs, umfassend ein fest mit der Struktur des Luftfahrzeugs verbundenes Lochprofil und einen mit diesem lösbar verbindbaren, fest mit der Innenraumkomponente verbundenen Schnellwechselbeschlag, wobei das Lochprofil mindestens ein Befestigungsloch aufweiset und der Schnellwechselbeschlag ein Gehäuse, mindestens eine darin um eine Achse verschwenkbar gelagerte Riegelwippe mit einem endseitig daran angeordneten, in ein Befestigungsloch des Lochprofils eingreifenden ersten Riegelvorsprung, einen an dem Gehäuse oder einer zweiten Riegelwippe angeordneten, in das selbe Befestigungsloch eingreifenden zweiten Riegelvorsprung und einen in dem Gehäuse zwischen zwei Endstellungen verschiebbar geführten Stößel umfasst, welcher einen Spreizkeil und mindestens eine Kulissenfläche mit einem Öffnungsnocken aufweist, wobei in der ersten Endstellung des Stößels der Spreizteil zwischen die beiden Riegelvorsprünge ragt und diese auseinander spreizt, wohingegen in der zweiten Endstellung des Stößels ein an der Riegelwippe an dessen dem Riegelvorsprung gegenüberliegenden Endabschnitt angeordneter Gegennocken an dem Öffnungsnocken anliegt, der Spreizkeil aus dem Bereich zwischen den beiden Riegelvorsprüngen zurückgezogen ist und die beiden Riegelvorsprünge im wesentlichen aneinander anliegen. Ein erstes für das erfindungsgemäße Befestigungssystem charakteristisches Merkmal ist somit, dass der Befestigung der Innenraumkomponenten nicht die aus den weiter oben benannten Druckschriften bekannten und herkömmlicherweise in Verkehrsflugzeugen verbreitet eingesetzten Befestigungsschienen mit C-förmigem Querschnitt dienen, sondern vielmehr einzelne, nicht zusammenhängende Befestigungslöcher, die in Lochprofilen angeordnet sind, welche dauerhaft fest - aber nicht zwingend unlösbar - mit der Struktur des Luftfahrzeugs verbunden oder ggf. in diese eingebunden sind. Indem bei Lochprofilen, die im Hinblick auf eine möglichst flexible Anordnung der Innenraumkomponenten eine Vielzahl von Befestigungslöchern aufweisen können, das jeweils zwischen zwei benachbarten Befestigungslöchern verbleibende Material des Lochprofils zu dessen Aussteifung beiträgt, kann ohne Einbuße an Festigkeit der Verbindung der Innenraumkomponenten mit der Struktur des Luftfahrzeugs das Lochprofil deutlich dünnwandiger ausgeführt werden als die beiden die Oberseite der bekannten Befestigungsschienen mit C-förmigem Querschnitt bildenden, einander gegenüberstehenden Leisten. Angesichts der großen Anzahl der herkömmlicherweise in Verkehrsflugzeugen verlegten Befestigungsschienen lässt sich auf diese Weise bereits dann, wenn das Lochprofil in Form einer gesonderten, nicht tragenden, mit der tragenden Struktur des Luftfahrzeugs fest verbundenen Lochschiene ausgeführt ist, eine signifikante Gewichtseinsparung erreichen. Erst recht gilt dies, wenn das Lochprofil durch ein tragendes Strukturbauteil des Luftfahrzeugs selbst gebildet oder in ein solches eingebunden ist, indem ein tragendes Strukturprofil des Luftfahrzeugs die der Befestigung der Innenraumkomponenten dienenden Befestigungslöcher aufweist, wodurch an der tragenden Struktur des Luftfahrzeugs anzubringende bzw. angebrachte gesonderte Befestigungsschienen entfallen können. In besonderer Anpassung an die vorstehend erläuterte, durch die einzelnen, nicht miteinander zusammenhängenden Befestigungslöcher definierte luftfahrzeugseitige Befestigungsstruktur weist, gemäß einem zweiten charakteristischen Aspekt des Befestigungssystems nach der vorliegenden Erfindung, der fest mit der Innenraumkomponente verbundene Schnellwechselbeschlag ein Gehäuse, mindestens eine darin um eine Achse verschwenkbar gelagerte Riegelwippe mit einem endseitig daran angeordneten, in ein Befestigungsloch eingreifenden ersten Riegelvorsprung, einen an dem Gehäuse oder einer zweiten Riegelwippe angeordneten, in das selbe Befestigungsloch eingreifenden zweiten Riegelvorsprung und einen in dem Gehäuse zwischen zwei Endstellungen verschiebbar geführten Stößel mit den weiter oben im einzelnen angeführten besonderen Merkmalen auf. Die entsprechende Gestaltung des im Rahmen der Erfindung eingesetzten Schnellwechselbeschlags gestattet insbesondere die Ausrüstung des Luftfahrzeugs mit seiner Innenraumausstattung innerhalb kürzester Zeit mit minimalem Aufwand, wobei die Verbindung in jeder Hinsicht zuverlässig ist und auch stärksten Beanspruchungen standhält und weiterhin auch ein häufiger Wechsel der Innenraumausstattung nicht zu einer Ermüdung von Teilen des Befestigungssystems oder sonstigen dessen Zuverlässigkeit beeinträchtigenden Erscheinungen führt. Insoweit ist insbesondere auch von erheblicher praktischer Bedeutung, dass durch die Anordnung mindestens eines der beiden Riegelvorsprünge an einer in dem Gehäuse um eine Achse schwenkbar gelagerten Riegelwippe, auf dessen dem Riegelvorsprung gegenüberliegenden Endabschnitt ein an dem Stößel angeordneter Öffnungsnocken wirkt, beim Lösen der Befestigung die Riegelvorsprünge des Schnellwechselbeschlags auch noch lange, nachdem die betreffende Innenraumkomponente eingebaut worden ist, zuverlässig aufeinander zubewegt werden, um den Schnellwechselbeschlag von dem Lochprofil abheben zu können. Ein durch Klemmwirkung, Korrosion und/oder andere Oberflächeneffekte hervorgerufenes Anhaften der Rastvorsprünge an dem Lochprofil in der Umgebung des jeweiligen Befestigungsloches wird somit durch die positive, zwangsweise Rückstellung der mindestens einen Riegelwippe beim Lösen der Befestigung überwunden.

Aus den vorstehenden Erläuterungen der vorliegenden Erfindung ist ersichtlich, dass diese sich in gleicher Weise zur flexiblen Befestigung von typischerweise in zahlreichen Reihen anzuordnenden Serien-Innenraumkomponenten wie insbesondere der Bestuhlung eines Luftfahrzeuges eignet wie auch der sicheren, aber leicht lösbaren punktuellen Verbindung einer Einzelkomponente mit der Struktur des Luftfahrzeugs, insbesondere im Sinne einer hard-point Verbindung. Je nach der jeweiligen Zweckbestimmung können somit im Rahmen der vorliegenden Erfindung insbesondere Lochprofile mit zahlreichen Befestigungslöchern oder aber Einzelloch-Lochprofile vorgesehen sein.

Eine erste bevorzugte Weiterbildung der Erfindung zeichnet sich dadurch aus, dass das Gehäuse des Befestigungsbeschlages eine der Oberfläche des Lochprofils gegenüberliegende Anlagefläche aufweist. Jedenfalls bei entriegelter Befestigung, d.h. wenn der Stößel seine zweite Endstellung einnimmt, stützt sich die zu befestigende Innenraumkomponente über die Anlagefläche des Gehäuses des Schnellwechselbeschlages an der Oberfläche des Lochprofils ab. Der mindestens eine Riegelvorsprung kann sich somit beim Verstellen des Stößels in dessen erste Endstellung ungehindert, mit minimaler Kraft in seine Riegelstellung bewegen; denn auf die Riegelwippe wirken in diesem Falle bei nicht verriegelter Befestigung keine Stützkräfte. Besonders bevorzugt ist die vorstehend erläuterte Anlagefläche dabei um die beiden Riegelvorsprünge herum ringförmig geschlossen. Dies trägt zu einer gleichmäßigen, großflächigen Abstützung der Innenraumkomponente auf dem Lochprofil bei.

Wenngleich die vorliegende Erfindung, wie sich aus der vorstehenden Darlegung ergibt, nicht zwingend zwei Riegelwippen erfordert, sondern sich vielmehr grundsätzlich auch mit einer einzigen Riegelwippe realisieren lässt, so weist der im Rahmen der vorliegenden Erfindung zum Einsatz kommende Schnellwechselbeschlag doch besonders bevorzugt zwei verschwenkbar in dem Gehäuse gelagerte Riegelwippen mit jeweils einem endseitig daran angeordneten Riegelvorsprung auf, wobei die beiden Riegelwippen besonders bevorzugt zueinander spiegelbildlich um zueinander parallele Achsen verschwenkbar sind. Die beiden Achsen verlaufen dabei bevorzugt parallel zu der durch das Befestigungsloch, in welches die beiden Riegelvorsprünge eingreifen, definierten Ebene. Die sich auf diese Weise ergebende Symmetrie der die unmittelbare Verbindung mit dem Lochprofil dienenden Teile des Schnellwechselbeschlags resultiert in einer besonders günstigen symmetrischen Kraftverteilung innerhalb des Befestigungssystems, was sich günstig auf die Zuverlässigkeit auswirkt und auch gestattet, die Komponenten des Schnellwechselbeschlags im Hinblick auf ein minimales Gewicht des Befestigungssystems zu optimieren.

Eine nochmals andere bevorzugte Weiterbildung der Erfindung zeichnet sich dadurch aus, dass mindestens einer der beiden Riegelvorsprünge einen Kopf und einen gegenüber diesem eingezogenen Schaft aufweist. Bei verriegelten Befestigung untergreift der gegenüber dem Schaft seitlich überstehende Kopf des betreffenden Riegelvorsprungs das Lochprofil in der Umgebung des Befestigungsloches, wodurch eine formschlüssige Verbindung zwischen dem Schnellwechselbeschlag und dem Lochprofil herbeigeführt wird.

Bei einer anderen bevorzugten Weiterbildung des erfindungsgemäßen Befestigungssystems ist in dem Gehäuse des Schnellwechselbeschlags mindestens ein Spannstift parallel zu dem Stößel verschiebbar geführt, der einen an die Oberfläche des Lochprofils andrückbaren Kopf aufweist. Besonders bevorzugt sind zwei derartige Spannstifte vorgesehen, und zwar einander bezogen auf die Riegelvorsprünge gegenüberliegend. Zur Verschiebung des mindestens einen Spannstifts relativ zum Gehäuse kann ein gesondertes Betätigungsmittel wie beispielsweise ein Excenter oder dergleichen vorgesehen sein. Gemäß einer besonders bevorzugten Weiterbildung ist indessen der mindestens eine Spannstift dergestalt mit dem Stößelgekoppelt, dass sein Kopf in der ersten Endstellung des Stößels, in der dessen Spreizkeil die beiden Riegelvorsprünge auseinander spreizt, aus dem Gehäuse des Schnellwechselbeschlags herausragt bzw. an die Oberfläche des Lochprofils angedrückt wird, in der zweiten Endstellung des Stößels demgegenüber in das Gehäuse des Schnellwechselbeschlags zurückgezogen bzw. von der Oberfläche des Lochprofils abgehoben ist. Unter Einsatz eines derartigen Spannstifts lässt sich selbst im Falle großzügiger Toleranzen, was die Dicke des Lochprofils betrifft, eine spielfreie Verbindung zwischen dem Schnellwechselbeschlag und dem Lochprofil sicherstellen, insbesondere wenn dem Spannstift ein Federelement zugeordnet ist, gegen dessen Vorspannkraft der Abstand zwischen dem Kopf des Spannstifts und dem stößelseitigen Widerlager des federelements reduzierbar ist. Wenn der Stößel, um den Schnellwechselbeschlag an dem Lochprofil zu verriegeln, aus seiner zweiten Endstellung in seine erste Endstellung gebracht wird, setzt der Spannstift kurz bevor der Stößel seine erste Endstellung erreicht, auf der Oberfläche des Lochprofils auf, und entsprechend der anschließenden restlichen Bewegung des Stößels in dessen erste Endstellung wird das Federelement des Spannstifts vorgespannt. Dies resultiert in einer entsprechend vorgespannten Anlage der Köpfe der Riegelvorsprünge an der gegenüberliegenden, unteren Oberfläche des Lochprofils in der Umgebung des betreffenden Befestigungsloches. Besonders bevorzugt sind dabei der Spreizkeil und die mindestens eine Riegelwippe so aufeinander abgestimmt, dass die mindestens eine Riegelwippe ihre den Schnellwechselbeschlag an dem Lochprofil verriegelnde Endstellung erreicht, bevor der Stößel seine erste Endstellung einnimmt, bevorzugt sogar bevor der Kopf des Spannstifts auf der Oberfläche des Lochprofils aufsetzt. Die für das Herbeiführen der spielfreien Verbindung zwischen Schnellwechselbeschlag und Lochprofil verantwortliche Vorspannkraft setzt somit erst dann ein, wenn die beiden Riegelvorsprünge ihre maximal zueinander gespreizte Riegelstellung einnehmen.

Die vorliegende Erfindung ist, wie der vorstehenden, sich auf die Befestigung von Innenraumkomponenten eines Luftfahrzeuges in dessen Kabine (einschließlich der Frachträume) beziehenden Erläuterung entnehmbar ist, mit besonderen Vorteilen in dem Luftfahrtsektor einsetzbar, in dem Aspekte der Gewichtseinsparung besonders bedeutsam sind. Dies gilt erkennbar auch für Anwendungen, in denen in einem Luftfahrzeug nicht eine Innenraumkomponente mit einer Struktur des Luftfahrzeugs zu verbinden ist sondern mehrere Innenraumkomponenten untereinander.

Im folgenden wird die vorliegende Erfindung anhand eines in der Zeichnung veranschaulichten bevorzugten Ausführungsbeispiels näher erläutert. Dabei zeigt
- Fig. 1: in perspektivischer Ansicht einen gemäß der vorliegenden Erfindung ausgeführten Schnellwechselbeschlag und ein den luftfahrzeugseitigen Befestigungsabschnitt bildendes Lochprofil, wobei der Befestigungsbeschlag seinen entriegelten Modus einnimmt,
- Fig. 2: die maßgeblichen, in dessen Gehäuse angeordneten Bauteile des Schnellwechselbeschlags nach Figur 1, ebenfalls in dessen entriegeltem Modus,
- Fig. 3: den Schnellwechselbeschlag nach Figur 1 in perspektivischer Ansicht in dessen verriegeltem Modus und
- Fig. 4: die maßgeblichen, im Inneren von dessen Gehäuse angeordneten Teile des Schnellwechselbeschlags nach Figur 4, ebenfalls in dessen verriegeltem Modus.

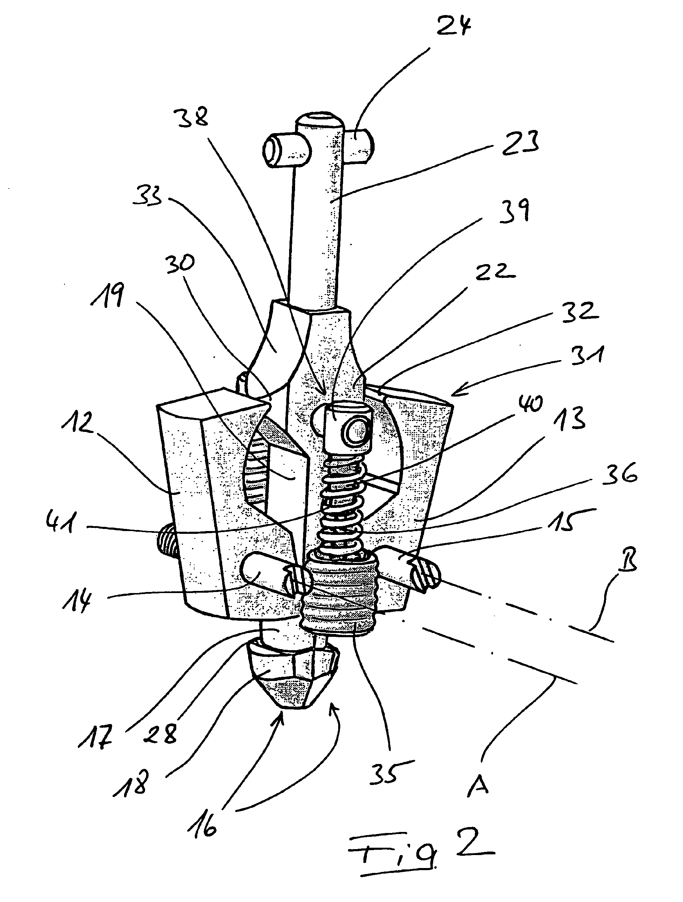

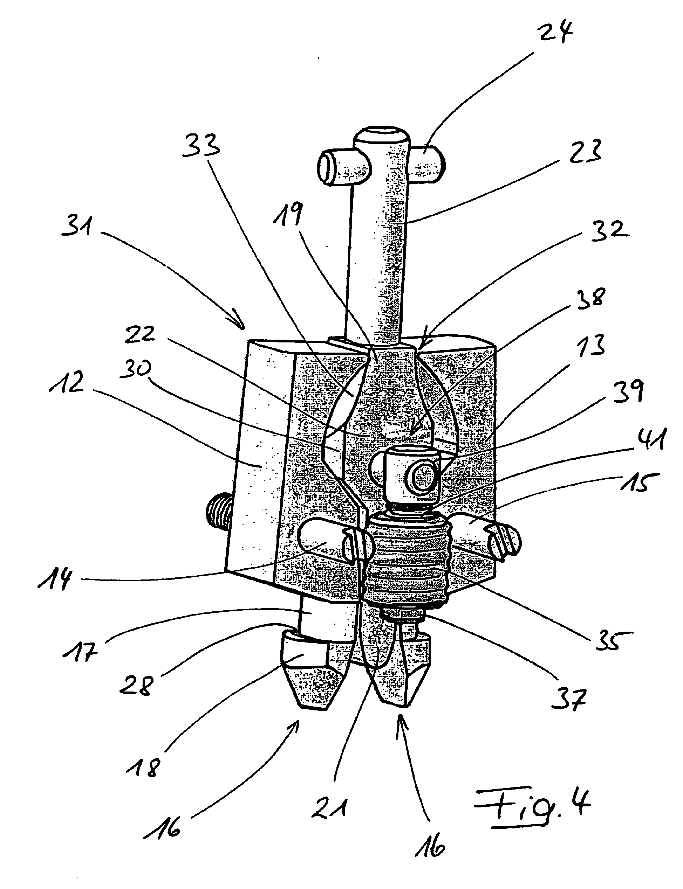

Das in der Zeichnung veranschaulichte Befestigungssystem zur schnell lösbaren Befestigung von Innenraumkomponenten wie die Bestuhlung, Schränke, Bordküchen oder dergleichen in der Kabine eines Luftfahrzeugs umfasst ein Lochprofil 1, welches Teil der Struktur des Luftfahrzeugs ist, und einen mit dieser lösbar verbindbaren Schnellwechselbeschlag 2. Das Lochprofil 1 weist eine Mehrzahl von runden Befestigungslöchern 3 auf. Der Schnellwechselbeschlag 2 umfasst ein Gehäuse 4 mit einem Verbindungsabschnitt 5, der der festen Verbindung des Schnellwechselbeschlags mit einer Innenraumkomponente dient, und einem Befestigungsabschnitt 6, der eine der äußeren Oberfläche 7 des Lochprofils 1 gegenüberliegende Anlagefläche 8 aufweist. Die Anlagefläche 8 ist um die Öffnung 9 eines in dem Gehäuse 4 vorgesehenen Hohlraumes 10, der die in den Fig. 2 und 4 gezeigten Bauteile zum überwiegenden Teil aufnimmt, herum ringförmig geschlossen.

Zur Verbindung des Schnellwechselbeschlags 2 mit der betreffenden Innenraumkomponente weist der Verbindungsabschnitt 5 des Gehäuses 4 sechs Bohrungen 11 für entsprechende Befestigungsschrauben auf.

In dem Hohlraum 10 des Gehäuses 4 sind zwei Riegelwippen 12 und 13 auf den Zylinderstiften 14 und 15 um die Achsen A und B verschwenkbar gelagert. An jeder Riegelwippe ist endseitig ein Riegelvorsprung 16 angeordnet, die zum Eingriff in ein und das selbe Befestigungsloch 3 bestimmt sind. Die beiden Riegelvorsprünge 16 umfassen jeweils einen einen kreissegmentförmigen Querschnitt aufweisenden Schaft 17 und einen gegenüber diesem verbreiterten Kopf 18 auf; sie ragen aus dem Hohlraum 10 des Gehäuses 4 heraus und stehen somit gegenüber der Anlagefläche 8 vor.

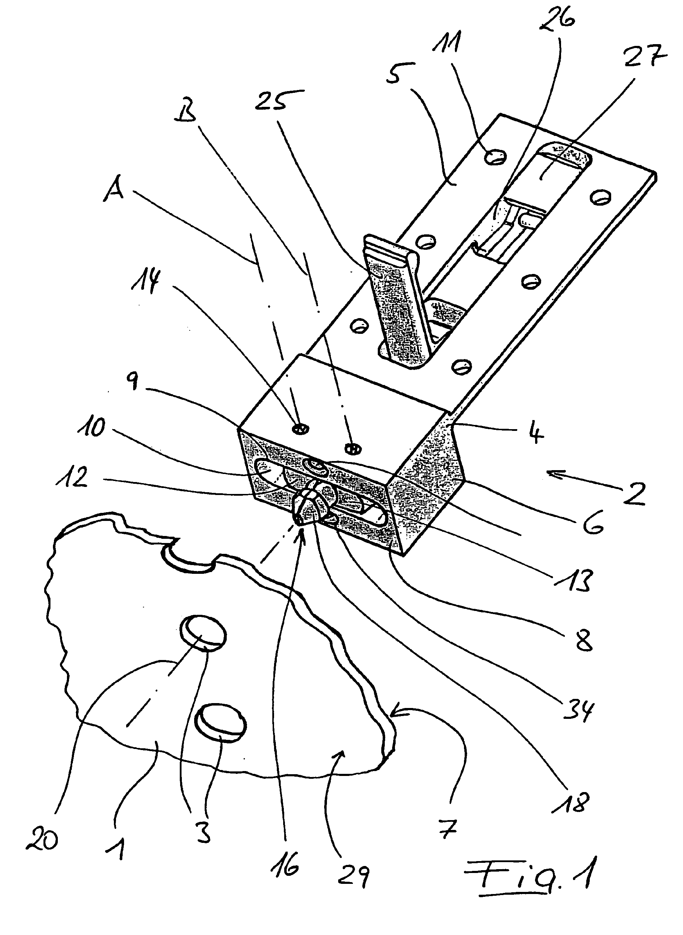

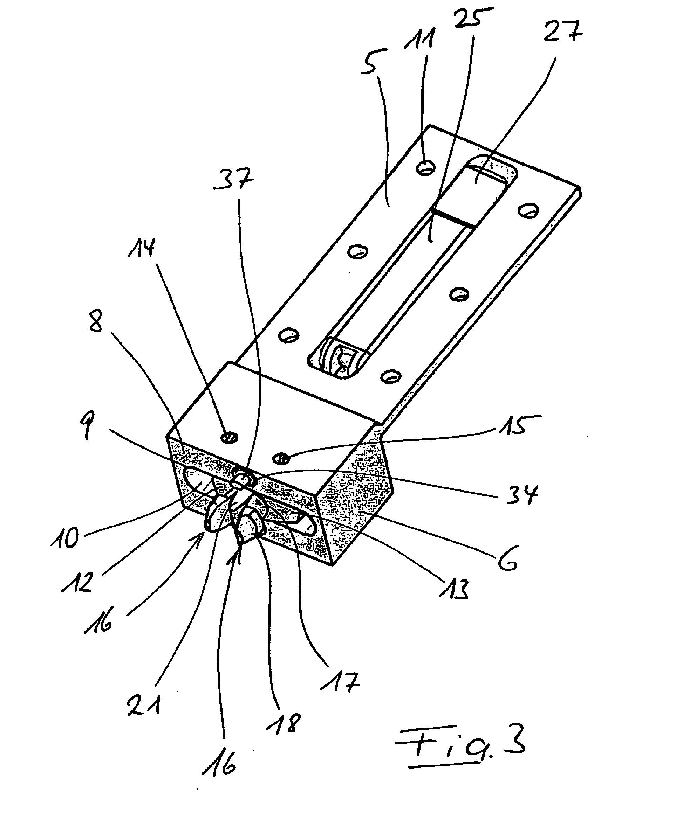

Weiterhin ist in dem Gehäuse 4 ein Stößel 19 aufgenommen, und zwar längs der Achse 20 zwischen zwei Endstellungen verschiebbar. Der Stößel 19 umfasst endseitig einen Spreizkeil 21, in seinem mittleren Bereich einen Nockenabschnitt 22 und an seinem dem Spreizkeil 21 gegenüberliegenden Ende einen Schaft 23 mit einem Querstift 24. An dem Querstift 24 greift ein Betätigungshebel 25 an, der in dem Gehäuse 4 zwischen einer in Fig. 3 gezeigten, in einer Aussparung 26 versenkt aufgenommenen ersten Stellung und einer in Fig. 1 gezeigten, aus dem Gehäuse 4 etwa rechtwinklig herausragenden zweiten Stellung verschwenkbar gelagert ist. In seiner ersten Stellung ist der Betätigungshebel 25 durch eine federbelastete Klinke 27 gesichert. Durch Verschwenken des Betätigungshebels aus seiner ersten in seine zweite Stellung wird der Stößel 19 längs der Achse 20 aus einer ersten Endstellung (Fig. 3 und 4) in eine zweite Endstellung (Fig. 1 und 2) bewegt. Umgekehrt wird beim Verschwenken des Betätigungshebels aus seiner zweiten in seine erste Stellung wird der Stößel 19 längs der Achse 20 aus einer zweiten Endstellung (Fig. 3 und 4) in eine erste Endstellung (Fig. 1 und 2) bewegt. Statt mittels eines Betätigungshebels kann der Stößel 19 erkennbar auch auf diverse andere Weise zwischen den beiden Endstellungen verschoben werden, beispielsweise unter Verwendung eins Stellantriebs.

In der ersten Endstellung des Stößels 19 ragt der Spreizkeil 21 zwischen die beiden Riegelvorsprünge 16 und spreizt diese auseinander (Fig. 3 und 4), so dass die beiden Köpfe 18 der Riegelvorsprünge 12 und 13 mit ihren Schultern 28 das Lochprofil 1 in der Umgebung des Befestigungsloches 3 untergreifen, d.h. auf der Unterseite 29 des Lochprofils anliegen, wodurch eine formschlüssige Verbindung zwischen dem Schnellwechselbeschlag 2 und dem Lochprofil 1 herbeigeführt wird. In der zweiten Endstellung des Stößels 19 ist der Spreizkeil 21 demgegenüber aus dem Bereich zwischen den beiden Riegelvorsprüngen 16 zurückgezogen, und die beiden in dem Nockenabschnitt 22 des Stößels 19 angeordneten Öffnungsnocken 30 drücken die an den Riegelwippen 12 und 13 jeweils an deren dem Riegelvorsprung 16 gegenüberliegenden Endabschnitt 31 angeordneter Gegennocken 32 so weit auseinander, dass die beiden Riegelvorsprünge 16 im wesentlichen aneinander anliegen. Für eine entsprechende Bewegung der Riegelwippen 12 und 13 sind im Nockenabschnitt 22 des Stößels Kulissenflächen 33 vorgesehen.

In dem Gehäuse 4 des Schnellwechselbeschlags 2 sind weiterhin in jeweils einer zugeordneten Bohrung 34 bzw. einem darin aufgenommenen Einsatz 35 zwei Spannstifte 36 parallel zu dem Stößel 19, d.h. parallel zur Achse 20 verschiebbar geführt. Jeder Spannstift 36 weist einen an die äußere Oberfläche 7 des Lochprofils 1 andrückbaren Kopf 37 auf. Am Nockenabschnitt 22 ist an dem Stößel 19 ein Kreuzkopf 38 mit zwei Druckstücken 39 vorgesehen. Jedes Druckstück 39 weist einen zylindrischen Ansatz 40 auf, in dem der zugeordnete Spannstift verschiebbar geführt ist. An den beiden Druckstücken 39 stützen sich Druckfedern 41 ab, die auf die Spannstifte 36 wirken. Auf diese Weise sind die beiden Spannstifte 36 dergestalt mit dem Stößel 19 gekoppelt, dass ihre Köpfe 37 in der ersten Endstellung des Stößels (Fig. 3 und 4) aus dem Gehäuse 4 des Schnellwechselbeschlags 2 herausragen und an die äußere Oberfläche 7 des Lochprofils 1 angedrückt werden. Zwischen jedem Spannstift 36 und dem Ansatz 40 des zugeordneten Druckstücks 39 wirkt jeweils ein Anschlag, der das Maß, um das der Spannstift - unter dem Einfluss der zugeordneten Druckfeder 41 - aus dem betreffenden Ansatz 40 herausgezogen werden kann, dergestalt begrenzt, dass die Köpfe 37 der Spannstifte 36 in der zweiten Endstellung des Stößels 19 (Fig. 1 und 2) von der äußeren Oberfläche 7 des Lochprofils 1 abgehoben und in das Gehäuse 4 des Schnellwechselbeschlags 2 zurückgezogen sind. In der durch den jeweiligen Anschlag definierten Stellung des Spannstifts 37 zu dem Ansatz 40 des Druckstücks ist die Druckfeder 41 bereits vorgespannt, um in der ersten Endstellung des Stößels eine vorbestimmte Anpresskraft des Kopfes 37 des Spannstifts 36 auf der Oberfläche 7 des Lochprofils 1 bereitzustellen.

## Patentansprüche

1. Befestigungssystem zur schnell lösbaren Befestigung von Innenraumkomponenten in der Kabine eines Luftfahrzeugs, umfassend ein fest mit der Struktur des Luftfahrzeugs verbundenes Lochprofil (1) und einen mit diesem lösbar verbindbaren, fest mit der Innenraumkomponente verbundenen Schnellwechselbeschlag (2), wobei das Lochprofil mindestens ein Befestigungsloch (3) aufweist und der Schnellwechselbeschlag ein Gehäuse (4), mindestens eine darin um eine Achse (A) verschwenkbar gelagerte Riegelwippe (12) mit einem endseitig daran angeordneten, in ein Befestigungsloch des Lochprofils eingreifenden ersten Riegelvorsprung (16), einen an dem Gehäuse oder einer zweiten Riegelwippe (13) angeordneten, in das selbe Befestigungsloch eingreifenden zweiten Riegelvorsprung (16) und einen in dem Gehäuse zwischen zwei Endstellungen verschiebbar geführten Stößel (19) umfaßt, welcher einen Spreizkeil (21) und mindestens eine Kulissenfläche (33) mit einem Öffnungsnocken (30) aufweist, wobei in der ersten Endstellung des Stößels der Spreizkeil zwischen die beiden Riegelvorsprünge ragt und diese auseinander spreizt, wohingegen in der zweiten Endstellung des Stößels ein an der Riegelwippe an dessen dem Riegelvorsprung gegenüberliegenden Endabschnitt (31) angeordneter Gegennocken (32) an dem Öffnungsnocken anliegt, der Spreizkeil aus dem Bereich zwischen den beiden Riegelvorsprüngen zurückgezogen ist und die beiden Riegelvorsprünge im wesentlichen aneinander anliegen.

2. Befestigungssystem nach Anspruch 1,
**dadurch gekennzeichnet,**
**dass** das Gehäuse (4) eine der Oberfläche (7) des Lochprofils (1) gegenüberliegende Anlagefläche (8) aufweist.

3. Befestigungssystem nach Anspruch 2,
**dadurch gekennzeichnet,**
**dass** die Anlagefläche (8) um die beiden Riegelvorsprünge (16) herum ringförmig geschlossen ist.

4. Befestigungssystem nach einem der Ansprüche 1 bis 3,
**dadurch gekennzeichnet,**
**dass** in dem Gehäuse (4) mindestens ein Spannstift (36) parallel zu dem Stößel (19) verschiebbar geführt ist, der einen an die Oberfläche (7) des Lochprofils (1) andrückbaren Kopf (37) aufweist.

5. Befestigungssystem nach Anspruch 4,
**dadurch gekennzeichnet,**
**dass** der Spannstift (36) dergestalt mit dem Stößel (19) gekoppelt ist, dass sein Kopf (37) in der ersten Endstellung des Stößels an der Oberfläche (7) des Lochprofils (1) anliegt.

6. Befestigungssystem nach Anspruch 5,
**dadurch gekennzeichnet,**
**dass** dem Spannstift (36) eine Drückfeder (41) zugeordnet ist, gegen deren Vorspannkraft der Abstand zwischen dem Kopf (37) des Spannstifts und dem stößelseitigen Widerlager der Drückfeder reduzierbar ist.

7. Befestigungssystem nach einem der Ansprüche 1 bis 6,
**dadurch gekennzeichnet,**
**dass** mindestens einer der beiden Riegelvorsprünge (16) einen Kopf (18) und einen gegenüber diesem eingezogenen Schaft (17) aufweist.

8. Befestigungssystem nach einem der Ansprüche 1 bis 7,
**dadurch gekennzeichnet,**
**dass** zwei verschwenkbar in dem Gehäuse gelagerte Riegelwippen (12, 13) mit jeweils einem endseitig daran angeordneten Riegelvorsprung (16) vorgesehen sind.

9. Befestigungssystem nach Anspruch 8,
**dadurch gekennzeichnet,**
**dass** die beiden Riegelwippen (12, 13) um zueinander parallele Achsen (A, B) verschwenkbar sind.

10. Befestigungssystem nach Anspruch 9,
**dadurch gekennzeichnet,**
**dass** die beiden Achsen (A, B) parallel zu der durch das Befestigungsloch (3), in welches die beiden Riegelvorsprünge (16) eingreifen, definierten Ebene verlaufen.

11. Befestigungssystem nach einem der Ansprüche 1 bis 10,
**dadurch gekennzeichnet,**
**dass** das Lochprofil (1) durch ein tragendes Strukturblech des Luftfahrzeugs selbst gebildet ist.

## Claims

1. A fastening system for providing a quickly detachable fastening for interior components in the cabin of an aircraft, comprising a perforated profiled element (1) attached permanently to the aircraft structure and a quick-change fitting (2) that is permanently attached to the interior component and can be releasably connected to the profiled element, wherein the profiled element has at least one mounting hole (3) and the quick-change fitting comprises a housing (4), at least one locking rocker (12) that is mounted so as to be pivotable therein about an axis (A) and having a first locking projection (16) that is disposed at the end thereof and engages in a mounting hole of the profiled element, a second locking projection (16) arranged on the housing or on a second locking rocker (13) and which engages in the same mounting hole, and a tappet (19) that is guided so as to be movable between two end positions in the housing, which has an expansion wedge (21) and at least one sliding surface (33) with an opening cam (30), wherein the expansion wedge extends between the two locking projections and forces them apart when the tappet is in the first end position, and a counteracting cam (32) arranged on the end section (31) of the locking rocker opposite to the locking projection lies flush with the opening cam when the tappet is in the second end position, the expansion wedge is retracted from the area between the two locking projections, and the two locking projections are positioned substantially flush with one another.

2. The fastening system as recited in claim 1,
**characterized in that**
the housing (4) has a bearing surface (8) opposite the surface (7) of the perforated profiled element (1).

3. The fastening system as recited in claim 2,
**characterized in that**
the bearing surface (8) is closed in the manner of a ring about the two locking projections (16).

4. The fastening system as recited in any of claims 1 to 3,
**characterized in that**
at least one coiled spring pin (36) is movable parallel to the tappet (19) in the housing (4) and has a head (37) that can be pressed against the surface (7) of the perforated profiled element (1).

5. The fastening system as recited in claim 4,
**characterized in that**
the coiled spring pin (36) is coupled with the tappet (19) in such manner that its head (37) is flush against the surface (7) of the perforated profiled element (1) when the tappet is in the first end position.

6. The fastening system as recited in claim 5,
**characterized in that**
a compression spring (41) is allocated to the coiled spring pin (36), the biasing force of which must be overcome to reduce the distance between the head (37) of the coiled spring pin and the abutment of the compression spring on the tappet side.

7. The fastening system as recited in any of claims 1 to 6,
**characterized in that**
at least one of the two locking projections (16) has a head (18) and a shaft (17) that is retracted with respect thereto.

8. The fastening system as recited in any of claims 1 to 7,
**characterized in that**
two locking rockers (12, 13) supported so as to be pivotable inside the housing (4) are provided, each having a locking projection (16) arranged on the end thereof.

9. The fastening system as recited in claim 8,
**characterized in that**
the two locking rockers (12, 13) are pivotable about axes (A, B) that are parallel to one another.

10. The fastening system as recited in claim 9,
**characterized in that**
the two axes (A, B) extend parallel to the plane defined by the mounting hole (3) in which the two locking projections (16) engage.

11. The fastening system as recited in any of claims 1 to 10,
**characterized in that**
the perforated profiled element (1) is formed by a supporting textured sheet of the aircraft itself.

## Revendications

1. Système de fixation pour une fixation détachable rapidement, pour des composants internes dans une cabine d'un aéronef, comprenant un profilé perforé (1) relié fixement à la structure de l'aéronef, et une garniture à remplacement rapide (2) apte à être reliée à celui-ci de façon détachable et reliée fixement au composant interne, dans lequel le profilé perforé comporte au moins un trou de fixation (3), et la garniture à remplacement rapide comprend un boîtier (4), au moins un levier de verrouillage (12) monté dans celui-ci de façon pivotante autour d'un axe (A), avec une première saillie de verrouillage (16) montée à une extrémité de celui-ci et s'engageant dans un trou de fixation du profilé perforé, une deuxième saillie de verrouillage (16) montée sur la boîtier ou sur un deuxième levier de verrouillage (13) et s'engageant dans le même trou de fixation, et un poussoir (19) guidé de façon coulissante entre deux positions finales dans le boîtier, lequel comporte une clavette d'écartement (21) et au moins une surface de coulisse (33) avec un ergot d'ouverture (30), dans lequel la clavette d'écartement s'engage entre les deux saillies de verrouillage dans la première position finale du poussoir, tout en écartant celles-ci, tandis que dans la deuxième position finale du poussoir, un contre-ergot (32) monté sur le levier de verrouillage, sur la section finale (31) de celui-ci qui est opposée à la saillie de verrouillage, repose sur l'ergot d'ouverture, la clavette d'écartement est retirée de la région située entre les deux saillies de verrouillage, et les deux saillies de verrouillage s'appliquent essentiellement l'une contre l'autre.

2. Système de fixation selon la revendication 1,
**caractérisé en ce que**
le boîtier (4) comporte une surface d'appui (8) opposée à la surface (7) du profilé perforé (1).

3. Système de fixation selon la revendication 2,
**caractérisé en ce que**
la surface d'appui (8) est fermée en anneau autour des deux saillies de verrouillage (16).

4. Système de fixation selon l'une des revendications 1 à 3,
**caractérisé en ce que**
dans le boîtier (4), au moins une goupille de serrage (36) comportant une tête (37) apte à être appliquée contre la surface (7) du profilé perforé (1) est guidée de façon coulissante parallèlement au poussoir (19).

5. Système de fixation selon la revendication 4,
**caractérisé en ce que**
la goupille de serrage (36) est accouplée de telle manière au poussoir (19), que sa tête (37) s'applique contre la surface (7) du profilé perforé (1) dans la première position finale du poussoir.

6. Système de fixation selon la revendication 5,
**caractérisé en ce que**
un ressort à pression (41) est attribué à la goupille de serrage (36), dont la force de précontrainte permet de réduire l'espacement entre la tête (37) de la goupille de serrage et le contre-appui du ressort à pression.

7. Système de fixation selon l'une des revendications 1 à 6,
**caractérisé en ce que**
au moins l'une des deux saillies de verrouillage (16) comporte une tête (18) et une tige (17) rétractée par rapport à celle-ci.

8. Système de fixation selon l'une des revendications 1 à 7,
**caractérisé en ce que**
il est prévu deux leviers de verrouillage (12, 13) installés de façon pivotante dans le boîtier, avec une saillie de verrouillage (16) montée respectivement à l'extrémité de chacun d'eux.

9. Système de fixation selon la revendication 8,
**caractérisé en ce que**
les deux leviers de verrouillage (12, 13) peuvent être pivotés autour d'axes (A, B) parallèles entre eux.

10. Système de fixation selon la revendication 9,
**caractérisé en ce que**
les deux axes (A, B) s'étendent parallèlement au plan défini par le trou de fixation (3) dans lequel s'engagent les deux saillies de verrouillage (16).

11. Système de fixation selon l'une des revendications 1 à 10,
**caractérisé en ce que**
le profilé perforé (1) est formé par une tôle de structure portante de l'aéronef lui-même.
